(19) Europäisches Patentamt

European Patent Office

Office européen des brevets

(11) **EP 1 156 352 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.$^7$: **G02B 6/44**

(21) Anmeldenummer: **01109949.6**

(22) Anmeldetag: **24.04.2001**

(54) **Verfahren zur Herstellung einer optischen Bandleitung aus mehreren Lichtwellenleitern**

Method of fabricating an optical fibre ribbon cable

Procédé de fabrication d'un ruban à fibres optiques

(84) Benannte Vertragsstaaten:
**DE FR GB**

(30) Priorität: **19.05.2000 DE 10024837**

(43) Veröffentlichungstag der Anmeldung:
**21.11.2001 Patentblatt 2001/47**

(73) Patentinhaber: **CCS Technology, Inc.
Wilmington, DE 19803 (US)**
Benannte Vertragsstaaten:
**DE FR GB**

(72) Erfinder:
• **Unterberger, Siegfried
96450 COBURG (DE)**
• **Kundis, Dieter
96486 Lautertal (DE)**
• **Ellwanger, Michael
NC 28602 (US)**

(74) Vertreter: **Epping Hermann & Fischer
Ridlerstrasse 55
80339 München (DE)**

(56) Entgegenhaltungen:
**EP-A- 0 262 340 EP-A- 0 950 908
DE-A- 19 702 106 US-A- 4 720 165**

**Beschreibung**

Die vorliegende Erfindung betrifft ein Verfahren zur Herstellung einer optischen Bandleitung aus mehreren Lichtwellenleitern, bei dem der äußere Umfang mindestens eines Lichtwellenleiters mit einem ersten Schichtmaterial beschichtet wird, der Lichtwellenleiter und mindestens ein weiterer Lichtwellenleiter in deren Längsrichtung nebeneinander angeordnet und zu einer Bandleitung geformt werden, so daß ein nicht durch Lichtwellenleiter belegter Spalt zwischen den zwei nebeneinander liegenden Lichtwellenleitern entsteht, und bei dem die Lichtwellenleiter mit einem zweiten Schichtmaterial beschichtet werden, so daß die Bandleitung mit dem zweiten Schichtmaterial umgeben ist und ein Zwischenraum zwischen den Lichtwellenleitern mit dem zweiten Schichtmaterial gefüllt ist.

Bei der Herstellung von Lichtwellenleitern wie beispielsweise optischen Fasern ist es üblich, diese mit einer farblich charakteristischen Schicht zu kennzeichnen, um deren Art und/oder Bestimmung bei der späteren Verwendung leicht bestimmen zu können. Dazu wird der äußere Umfang des zu kennzeichnenden Lichtwellenleiters mit einem farbigen Schichtmaterial beschichtet. Um in einem weiteren Arbeitsgang mehrere Lichtwellenleiter zu einer optischen Bandleitung zu formen, werden diese nebeneinander in deren Längsrichtung angeordnet und im allgemeinen mit einem weiteren, zweiten Schichtmaterial beschichtet, das die zu formende Bandleitung umgibt.

Um nach der Herstellung beispielsweise zwei optische Bandleitungen mit Lichtwellenleitern miteinander zu verbinden, ist es im allgemeinen erforderlich, die zweite, die Bandleitung umgebende Schicht an den Enden jeweils zu entfernen, möglichst ohne daß die darunterliegende Farbschicht entfernt wird. Damit bleiben die Lichtwellenleiter weiterhin unterscheidbar. Das Entfernen der zweiten, die Bandleitung umgebenden Schicht in einem Stück ist im allgemeinen relativ schwierig, da die beiden Schichten dazu neigen, miteinander zu verkleben.

Die zweite Schicht kann beispielsweise chemisch mittels eines Lösungsmittels entfernt werden. Ein solches Verfahren ist im allgemeinen nicht umweltfreundlich und kann mitunter auch das Bedienungspersonal gefährden. Eine andere Methode ist, die zweite Schicht an den Enden thermisch zu entfernen. Die Schicht kann in kurzen Stücken erwärmt und anschließend abgezogen werden. Nachteile dieser Lösung sind, daß nur relativ kurze Stücke entfernt werden können, und daß dies nur mit einem speziellen Werkzeug möglich ist. Außerdem wird dabei die Farbschicht der Lichtwellenleiter gleichzeitig mit entfernt, wodurch die Kennzeichnung der Lichtwellenleiter verloren geht. Weiterhin ist es möglich, die zweite Schicht mechanisch zu entfernen. Dies erfordert im allgemeinen eine relativ umständlich Handhabung und es besteht die Gefahr, daß die darunterliegende Farbschicht ebenfalls entfernt wird.

Aus EP 0 614 099 A2 ist es bekannt, für die Farbschicht und eine die Bandleitung umgebende zweite Schicht ein Schichtmaterial zu verwenden, das einen Anteil eines haftungslösenden Zusatzes aufweist, beispielsweise einen Anteil an Silikon. Dadurch wird die Haftung zwischen den beiden Schichten reduziert. Die mechanischen Eigenschaften können dadurch aber im allgemeinen verschlechtert werden.

Ein Verfahren zur Herstellung einer optischen Bandleitung ist aus DE 197 02 106 A1 bekannt. Zur Herstellung der Bandleitung werden mehrere Lichtwellenleiter nebeneinander durch eine Durchtrittsöffnung einer Beschichtungseinrichtung hindurchgeführt. Die Durchmesser der Lichtwellenleiter und/oder die Lage der Lichtwellenleiter innerhalb der Bandleitung werden bestimmt. Die Breite der Durchtrittsöffnung der Beschichtungseinrichtung wird aufgrund der gemessenen Durchmesserwerte und/oder der Größe eines Spalts zwischen zwei Lichtwellenleitern verändert. Durch die sich ausbildende Schleppströmung des Beschichtungsmaterials werden die Zwischenräume zwischen oder an den Lichtwellenleitern vollständig mit dem Schichtmaterial gefüllt. Bei optimaler Zentrierung stoßen die Lichtwellenleiter unmittelbar aneinander an.

Die Lichtwellenleiter weisen im allgemeinen einen vorgegebenen Nenn-Außendurchmesser auf. In der Praxis treten jedoch Durchmesserschwankungen je Lichtwellenleiter auf, so daß die Lichtwellenleiter im allgemeinen Übertoleranzen oder Untertoleranzen aufweisen. Infolge von zu geringen Durchmesserwerten kann sich zwischen zwei nebeneinander angeordneten Lichtwellenleitern ein nicht durch Lichtwellenleiter belegter Spalt ausbilden. Dies wird beispielsweise dadurch verursacht, daß die Schleppströmungskräfte nicht mehr ausreichend groß genug sind, um eine vollständige zentrierte Anordnung der Lichtwellenleiter zu gewährleisten.

Weist der Spalt dabei eine bestimmte Spaltbreite auf, kann die zweite, die Bandleitung umgebende Schicht im allgemeinen nicht mehr vollständig entfernt werden, da das zweite Schichtmaterial in dem Zwischenraum zwischen den Lichtwellenleitern beziehungsweise in dem Spalt nicht bricht.

Die Aufgabe der vorliegenden Erfindung ist es, ein Verfahren zur Herstellung einer optischen Bandleitung aus mehreren Lichtwellenleitern der eingangs genannten Art anzugeben, durch das es ermöglicht ist, daß das zweite Schichtmaterial nach der Herstellung möglichst zuverlässig entfernt werden kann, ohne daß das darunterliegende erste Schichtmaterial entfernt wird.

Die Aufgabe wird gelöst durch ein Verfahren zur Herstellung einer optischen Bandleitung aus mehreren Lichtwellenleitern gemäß Patentanspruch 1.

Durch die Steuerung der Lage eines der Lichtwellenleiter innerhalb der Bandleitung in Abhängigkeit der Schichtdicke des zweiten Schichtmaterials wird die Spaltbreite des nicht durch Lichtwellenleiter belegten Spalts zwischen den zwei nebeneinanderliegenden Lichtwellenleitern in Abhängigkeit der Schichtdicke beeinflußt. Es ergibt sich daher eine Spaltbreite, die abhängig von der Schichtdicke ist. Dadurch kann der Einfluß der Schichtdicke des zweiten Schichtmaterials hinsichtlich des späteren Entfernens des zweiten Schichtmaterials berücksichtigt werden. Die Spaltbreite kann derart bemessen werden, daß das zweite Schichtmaterial in dem Zwischenraum beziehungsweise in dem Spalt zwischen den zwei nebeneinander angeordneten Lichtwellenleitern beim späteren Abziehen des zweiten Schichtmaterials auf jeden Fall gebrochen wird. Dadurch ist ermöglicht, daß das zweite Schichtmaterial entfernt werden kann, ohne daß die darunterliegende erste Schicht, beispielsweise eine Farbschicht zur Kennzeichnung eines Lichtwellenleiters, entfernt wird.

In einer Weiterbildung des erfindungsgemäßen Verfahrens wird die Lage mindestens eines der Lichtwellenleiter innerhalb der Bandleitung außerdem in Abhängigkeit eines Zugmoduls und Schubmoduls des zweiten Schichtmaterials gesteuert. Dadurch kann vorteilhaft die jeweilige individuelle Beschaffenheit des zweiten Schichtmaterials bei der Herstellung der Bandleitung berücksichtigt werden, so daß das zweite Schichtmaterial nach der Herstellung erfolgreich abgelöst werden kann.

In einer vorteilhaften Ausführungsform des erfindungsgemäßen Verfahrens wird das erste Schichtmaterial vor dem Aufbringen des zweiten Schichtmaterials ausgehärtet. Dies wird üblicherweise mittels Lampen durchgeführt, die eine UV-Strahlung emittieren. Dabei sollte beachtet werden, daß die UV-Leistung der Lampen ausreichend ist, um das erste Schichtmaterial, das beispielsweise eine Farbschicht des betreffenden Lichtwellenleiters bildet, vollständig auszuhärten. Das Aushärten wird vorteilhaft in einer Stickstoffatmosphäre durchgeführt, die einen relativ geringen Sauerstoffanteil aufweist. Der Sauerstoffanteil beträgt vorzugsweise 1 bis 250 Partikel per Million Partikel (ppm). Für den Fall, daß das erste Schichtmaterial nicht vollständig ausgehärtet wird, haftet im allgemeinen das zweite Schichtmaterial relativ stark an dem ersten Schichtmaterial, so daß ein Entfernen des zweiten Schichtmaterials erschwert wird.

Um den nicht durch Lichtwellenleiter belegten Spalt möglichst klein zu halten beziehungsweise um eine vorgegebene Spaltbreite möglichst genau einzuhalten, ist es darüber hinaus vorteilhaft, den Prozeß zum Aufbringen des ersten Schichtmaterials, zum Beispiel einen Färbeprozeß, zu optimieren. Dadurch können Durchmesserschwankungen der Lichtwellenleiter während des Färbeprozesses reduziert werden. Dies wird vorteilhaft erreicht, indem die zu beschichtenden Lichtwellenleiter mit dem ersten Schichtmaterial beschichtet werden, so daß sich eine Schichtdicke zwischen 6 und 9 Mikrometern (μm) ergibt. Dies wird beispielsweise durch Wahl einer geeigneten Färbedüse des Beschichtungswerkzeugs erreicht.

In einer Weiterbildung des erfindungsgemäßen Verfahrens wird das erste Schichtmaterial und/oder zweite Schichtmaterial so gewählt, daß die Reißfestigkeit des zweiten Schichtmaterials größer als die Haftkraft zwischen dem ersten und zweiten Schichtmaterial ist. Ein relativ elastisches zweites Schichtmaterial mit einer relativ hohen Reißfestigkeit ermöglicht ein einfaches Entfernen des zweiten Schichtmaterials, ohne daß das erste Schichtmaterial an dem zweiten Schichtmaterial haften bleibt.

Weitere vorteilhafte Aus- und Weiterbildungen sind Gegenstand abhängiger Ansprüche.

Die Erfindung wird im folgenden anhand der in der Zeichnung dargestellten Figuren näher erläutert. Es zeigen:

Figur 1     einen Querschnitt einer Ausführungsform einer optischen Bandleitung mit mehreren Lichtwellenleitern,

Figur 2     eine schematische Darstellung der Bandleitung beim Abziehen der umgebenden zweiten Schicht,

Figur 3     einen Ausschnitt der umgebenden zweiten Schicht,

Figur 4     ein Funktionsbild einer beispielhaften Produktionsanlage,

Figur 5     einen Querschnitt einer Durchtrittsöffnung der Beschichtungseinrichtung gemäß Figur 4.

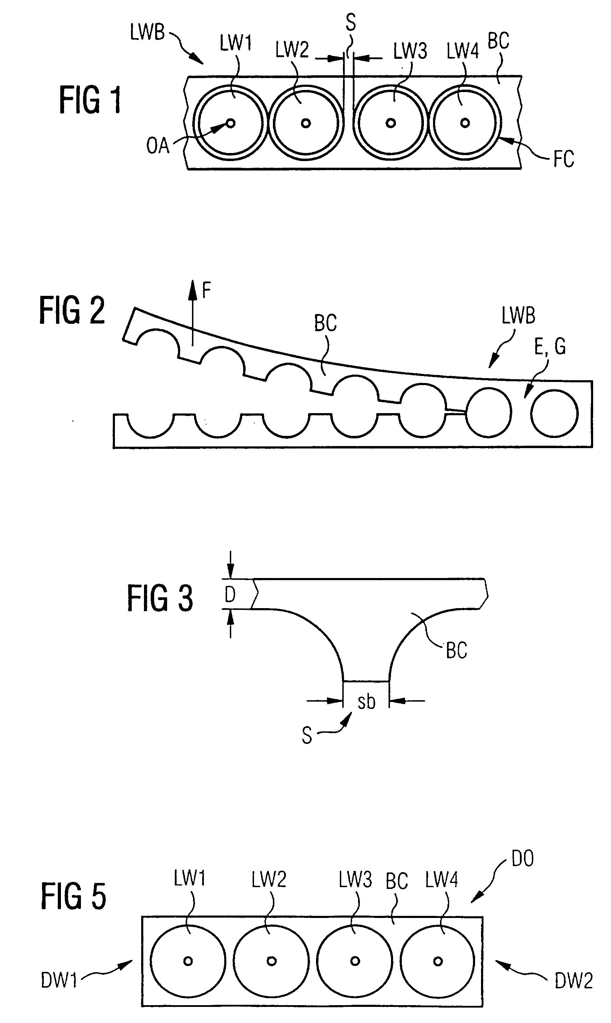

Figur 1 zeigt einen Querschnitt einer Ausführungsform einer optischen Bandleitung LWB, die in diesem Beispiel vier Lichtwellenleiter LW1 bis LW4 aufweist. Die Lichtwellenleiter LW1 bis LW4 weisen eine Längsrichtung entlang ihrer optischen Achse OA auf. Die Lichtwellenleiter LW1 bis LW4 können beispielsweise als optische Fasern oder als optische Kabel mit mehreren darin angeordneten optischen Fasern ausgeführt sein. Die Lichtwellenleiter LW1 bis LW4 sind in ihren Längsrichtungen derart nebeneinander angeordnet, daß sie parallel zueinander in einer gemeinsamen Ebene zu liegen kommen.

Die Lichtwellenleiter LW1 bis LW4 sind mit einem ersten Schichtmaterial FC beschichtet, das in diesem Beispiel zur Kennzeichnung der Lichtwellenleiter LW1 bis LW4 dient. Das erste Schichtmaterial FC wird daher auch als sogenanntes Farbcoating bezeichnet. In dieser Ausführungsform sind alle Lichtwellenleiter LW1 bis LW4 mit dem Farbcoating FC versehen.

Die Bandleitung LWB weist außerdem einen Spalt S zwischen den Lichtwellenleitern LW2 und LW3 auf. Dieser Spalt S beziehungsweise der Zwischenraum in der Umgebung des Spaltes S ist nicht durch Lichtwellenleiter belegt. Der Spalt S kann beispielsweise dadurch entstehen, daß die Durchmesser der Lichtwellenleiter LW2 und LW3 von einem Nenn-Durchmesser abweichen. Ein Nenn-Durchmesser der Lichtwellenleiter LW1 bis LW4 beträgt beispielsweise 260 µm, ein solcher Toleranzbereich in der Praxis typischerweise 5 µm. Weist die optische Bandleitung LWB beispielsweise 12 Lichtwellenleiter auf, so kann sich dadurch ein Toleranzbereich von insgesamt 60 µm ergeben.

Die Lichtwellenleiter LW1 bis LW4 sind außerdem mit einem zweiten Schichtmaterial BC beschichtet, das die Bandleitung LWB vollständig umgibt. Das zweite Schichtmaterial BC wird auch als sogenanntes Bandcoating bezeichnet. Die Zwischenräume zwischen jeweils zwei benachbarten Lichtwellenleitern sind dabei wie der Spalt S mit dem Bandcoating BC gefüllt.

In Figur 2 ist eine schematische Darstellung gezeigt, in der der obere Teil des Bandcoatings BC nach oben hin entfernt wird. Das zweite Schichtmaterial BC, das das Bandcoating bildet, weist dabei einen Zugmodul E und einen Schubmodul G auf. Um das Bandcoating BC von dem Farbcoating FC zu lösen, muß die Kraft F größer sein als die Haftkraft zwischen dem Bandcoating BC und dem Farbcoating FC. Für die Kraft F gilt allgemein die Beziehung

$$F = e\, E\, A,$$

wobei e die Bruchdehnung des Bandcoatings BC und E den Zugmodul des Bandcoatings BC bezeichnet. A bezeichnet eine Querschnittsfläche, die in Bezug zur Schichtdicke des Bandcoatings BC steht.

Figur 3 zeigt einen Ausschnitt des Bandcoatings BC aus Figur 2. Der Spalt S weist eine Spaltbreite sb auf. Das Bandcoating BC weist eine kleinste auftretende Schichtdicke D auf, die zwischen einer waagrechten Tangente einer der Lichtwellenleiter LW1 bis LW4 und der äußeren Begrenzung des Bandcoatings BC gemessen wird. Um das Bandcoating BC vollständig von dem Farbcoating FC ablösen zu können, muß allgemein die Bedingung

$$E \cdot sb < 2 \cdot D \cdot G$$

$$sb < 2 \cdot D \cdot G/E$$

erfüllt sein. Bei einem Bandcoating BC, das üblicherweise aus einem acrylhaltigen Matrixmaterial hergestellt ist, läßt sich diese Beziehung durch die Näherung

$$E = 3\, G$$

zu der Beziehung

$$sb < 2/3\, D$$

vereinfachen. Das bedeutet, um die Ablösbarkeit des Bandcoatings BC gewährleisten zu können, muß die Spaltbreite sb den Wert 2/3 D unterschreiten.

Es kann also zusammenfassend festgestellt werden, daß bei der Herstellung der Bandleitung LWB die Lage mindestens eines der Lichtwellenleiter LW2 oder LW3 aus Figur 1 innerhalb der Bandleitung LWB in Abhängigkeit der Schichtdicke D des Bandcoatings BC gesteuert werden muß, damit sich eine Spaltbreite sb gemäß der oben genannten Bedingungen ergibt. Die Spaltbreite sb muß dabei einen Wert unterschreiten, der gemäß der vereinfachten oben genannten Beziehung abhängig von der Schichtdicke D ist.

Ist die oben genannte Vereinfachung der Beziehung nicht möglich, beispielsweise durch Verwendung eines anderen Matrixmaterials zur Herstellung des Bandcoatings BC, so ist die Spaltbreite sb außerdem abhängig von dem Zugmodul E und Schubmodul G. Um die geforderte Spaltbreite sb zu erfüllen, muß bei der Herstellung also die Lage mindestens eines der Lichtwellenleiter LW2 oder LW3 aus Figur 1 innerhalb der Bandleitung LWB außerdem in Abhängigkeit des Zugmoduls E und des Schubmoduls G des Bandcoatings BC gesteuert werden. Die Spaltbreite sb muß dabei den Wert gemäß der oben genannten nicht vereinfachten Beziehung unterschreiten. Gemäß dieser Beziehung ist der Wert für die Spaltbreite sb abhängig von dem Zugmodul E und Schubmodul G sowie der Schichtdicke D des Bandcoatings BC.

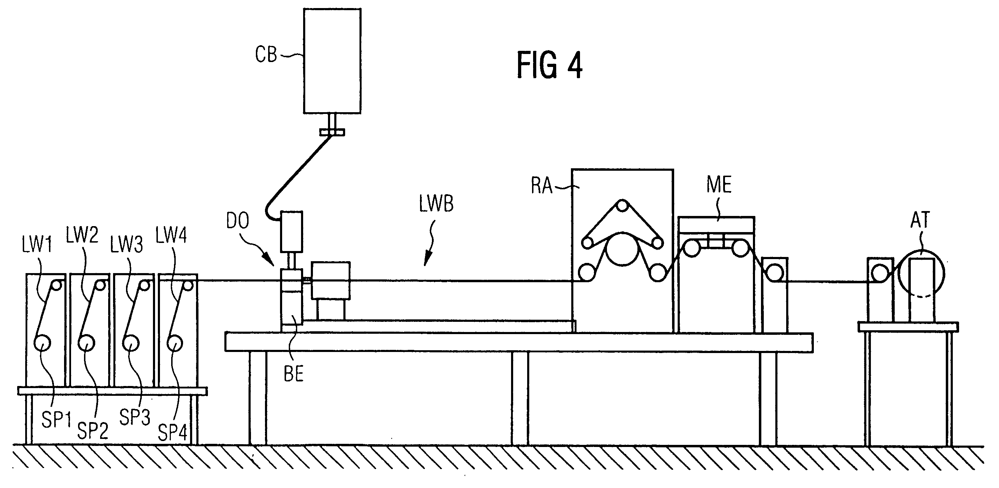

Figur 4 zeigt ein Funktionsbild einer beispielhaften Produktionsanlage zur Herstellung einer Bandleitung LWB. Die Lichtwellenleiter LW1 bis LW4 werden auf Spulen SP1 bis SP4 aufgewickelt bereitgestellt. Die Lichtwellenleiter LW1 bis LW4 werden in einer parallelen Anordnung in Längsrichtung nebeneinander, wie gemäß Figur 1 dargestellt, einer Beschichtungseinrichtung BE zugeführt. Die Lichtwellenleiter LW1 bis LW4 sind dabei bereits mit der Farbschicht FC gemäß Figur 1 beschichtet. Der Behälter CB enthält das Matrixmaterial, mit dem die Lichtwellenleiter LW1 bis LW4 in einem weiteren Arbeitsgang beschichtet werden. Das in dem Behälter CB enthaltene Matrixmaterial bildet das spätere Bandcoating BC gemäß Figur 1. Die nebeneinander angeordneten Lichtwellenleiter LW1 bis LW4 werden in der Beschichtungseinrichtung BE mit dem im Behälter CB enthaltenen Matrixmaterial beschichtet, so daß die daraus geformte Bandleitung LWB vollständig mit dem Bandcoating BC umgeben ist. Die Bandleitung LWB wird durch die Abzugseinrichtung RA durch die Beschichtungseinrichtung BE gezogen. In der Meßeinrichtung ME wird die Breite des Spalts S gemessen. Die Bandleitung LWB wird schließlich auf die Trommel AT aufgewickelt.

Zur Feststellung des Spaltes S beziehungsweise zur Feststellung der Spaltbreite sb ist in der Meßeinrichtung ME beispielsweise eine Lichtquelle vorgesehen, wie in DE 197 02 106 A1 beschrieben. Die Bandleitung LWB wird durch die Lichtquelle vollständig ausgeleuchtet. Auf der gegenüberliegenden Seite der Lichtquelle ist beispielsweise ein Licht-Diodenarray vorgesehen. Entsteht ein Spalt S in der Bandleitung LWB, so tritt durch diesen Spalt S ein Lichtsignal hindurch und gelangt auf ein entsprechendes Element des Diodenarrays. Die Spaltbreite sb wird hinsichtlich der oben genannten Beziehung zur Schichtdicke D überprüft. Bei einer Verletzung der Beziehung wird ein Signal abgeleitet, welches einen Nachstellvorgang in der Beschichtungseinrichtung BE in Abhängigkeit der Schichtdicke D auslöst, so daß die Spaltbreite sb verändert wird und die Beziehung erfüllt ist.

Die Lage der Lichtwellenleiter LW1 bis LW4 innerhalb der Bandleitung LWB kann, wie ebenfalls in DE 197 02 106 A1 beschrieben, durch Änderung der geometrischen Abmessungen der Durchtrittsöffnung DO in der Beschichtungseinrichtung BE beeinflußt werden. Die Lichtwellenleiter LW1 bis LW4 werden dabei durch die Durchtrittsöffnung DO in ihrer Längsrichtung hindurchgeführt. Zur Beeinflussung der Lage der Lichtwellenleiter innerhalb der Bandleitung LWB wird eine Änderung der Breite der Durchtrittsöffnung DO vorgenommen. Dazu ist beispielsweise eine der beiden Seitenwände der Durchtrittsöffnung DO beweglich ausgebildet.

In Figur 5 ist ein Querschnitt einer beispielhaften Durchtrittsöffnung DO gezeigt. Die Lichtwellenleiter LW1 bis LW4 werden in ihrer Längsrichtung durch die Durchtrittsöffnung DO hindurchgeführt und mit dem zweiten Schichtmaterial BC beschichtet, das das Bandcoating bildet. Zur Beeinflussung der Lage einer oder mehrerer einzelner Lichtwellenleiter LW1 bis LW4 sind die Seitenwände DW1 und/oder DW2 beweglich. Die Seitenwände können infolge eines Signals aus der Meßeinrichtung ME gemäß Figur 4 nachgeregelt werden.

Ein derartiger Nachstellvorgang wird vorteilhaft zu Beginn eines Herstellungsprozesses zur Herstellung der Bandleitung LWB vorgenommen und für die Herstellung einer Charge von Bandleitungen LWB beibehalten. Innerhalb einer Charge von Lichtwellenleitern sind Durchmesserschwankungen üblicherweise relativ gering beziehungsweise die Toleranzen relativ einheitlich, so daß es im allgemeinen nicht erforderlich ist, innerhalb einer Charge fortlaufend nachzuregeln.

**Patentansprüche**

1.  Verfahren zur Herstellung einer optischen Bandleitung (LWB) aus mehreren Lichtwellenleitern mit den Merkmalen:

    - der äußere Umfang mindestens eines Lichtwellenleiters (LW2) wird mit einem ersten Schichtmaterial (FC) beschichtet,
    - der Lichtwellenleiter (LW2) und mindestens ein weiterer Lichtwellenleiter (LW3) werden in deren Längsrichtung (OA) in einer Ebene nebeneinander angeordnet, so daß ein nicht durch Lichtwellenleiter belegter Spalt (S) mit einer Spaltbreite (sb) zwischen den zwei nebeneinander liegenden Lichtwellenleitern (LW2, LW3) entsteht,
    - die Lichtwellenleiter (LW2, LW3) werden mit einem zweiten Schichtmaterial (BC) beschichtet, das eine Schichtdicke (D) in Richtung senkrecht zu der genannten Ebene aufweist, so daß der Zwischenraum zwischen den Lichtwellenleitern (LW2, LW3) mit dem zweiten Schichtmaterial (BC) gefüllt ist und die Bandleitung (LWB) geformt wird,
    - die Spaltbreite (sb) wird gemessen,

    **dadurch gekennzeichnet, daß**
    die Lage mindestens eines der Lichtwellenleiter (LW2, LW3) so gesteuert wird, daß die Spaltbreite (sb) kleiner wird als ein von der Schichtdicke (D) des zweiten Schichtmaterials abhängiger Wert, wobei der Wert so gewählt ist, daß das zweite Schichtmaterial (BC) vom ersten Schichtmaterial ablösbar ist.

2.  Verfahren nach Anspruch 1,
    **dadurch gekennzeichnet, daß**
    die Lage mindestens eines der Lichtwellenleiter (LW2, LW3) innerhalb der Bandleitung (LWB) außerdem in Abhängigkeit eines Zugmoduls (E) und Schubmoduls (G) des zweiten Schichtmaterials (BC) gesteuert wird.

3.  Verfahren nach Anspruch 2,
    **dadurch gekennzeichnet, daß**
    die Lage mindestens eines der Lichtwellenleiter (LW2, LW3) innerhalb der Bandleitung (LWB) so gesteuert wird, daß die Spaltbreite (sb) einen Wert unterschreitet, der abhängig von dem Zugmodul (E) und Schubmodul (G) des zweiten Schichtmaterials (BC) ist.

4.  Verfahren nach einem der Ansprüche 1 bis 3,
    **dadurch gekennzeichnet, daß**
    die Lage mindestens eines der Lichtwellenleiter (LW2, LW3) innerhalb der Bandleitung (LWB) in Abhängigkeit einer kleinsten auftretenden Schichtdicke (D) des zweiten Schichtmaterials (BC) gesteuert wird, die in Richtung senkrecht zu der genannten Ebene entlang des Radius eines der Lichtwellenleiter gemessen wird.

5.  Verfahren nach einem der Ansprüche 1 bis 4,
    **dadurch gekennzeichnet, daß**
    das erste Schichtmaterial (FC) vor dem Aufbringen des zweiten Schichtmaterials (BC) ausgehärtet wird.

6. Verfahren nach Anspruch 5,
**dadurch gekennzeichnet, daß**
das erste Schichtmaterial (FC) in einer Atmosphäre mit einem Sauerstoffanteil von 1 bis 250 Partikel per Million Partikel ausgehärtet wird.

7. Verfahren nach einem der Ansprüche 1 bis 6,
**dadurch gekennzeichnet, daß**
der Lichtwellenleiter (LW2) mit dem ersten Schichtmaterial (FC) beschichtet wird, so daß sich eine Schichtdicke des ersten Schichtmaterials (FC) zwischen 6 und 9 Mikrometern ergibt.

8. Verfahren nach einem der Ansprüche 1 bis 7,
**dadurch gekennzeichnet, daß**
das erste Schichtmaterial (FC) und/oder zweite Schichtmaterial (BC) so gewählt wird, daß die Reißfestigkeit des zweiten Schichtmaterials (BC) größer ist als die Haftkraft zwischen dem ersten Schichtmaterial (FC) und dem zweiten Schichtmaterial (BC).

**Claims**

1. Method of producing an optical ribbon cable (LWB) from a number of optical waveguides with the features that:

   - the outer circumference of at least one optical waveguide (LW2) is coated with a first layer material (FC),
   - the optical waveguide (LW2) and at least one further optical waveguide (LW3) are arranged in their longitudinal direction (OA) next to each other in a plane, so that a gap (S) not occupied by optical waveguides with a gap width (sb) is produced between the two optical waveguides (LW2, LW3) lying next to each other,
   - the optical waveguides (LW2, LW3) are coated with a second layer material (BC) which has a layer thickness (D) in the direction perpendicular to the said plane, so that the interspace between the optical waveguides (LW2, LW3) is filled with the second layer material (BC) and the ribbon cable (LWB) is formed,
   - the gap width (sb) is measured,

   **characterized in that**
   the position of at least one of the optical waveguides (LW2, LW3) is controlled such that the gap width (sb) becomes smaller than a value dependent on the layer thickness (D) of the second layer material, the value being chosen such that the second layer material (BC) is detachable from the first layer material.

2. Method according to Claim 1, **characterized in that** the position of at least one of the optical waveguides (LW2, LW3) within the ribbon cable (LWB) is also controlled in dependence on a tensile modulus (E) and shear modulus (G) of the second layer material (BC).

3. Method according to Claim 2, **characterized in that** the position of at least one of the optical waveguides (LW2, LW3) within the ribbon cable (LWB) is controlled such that the gap width (sb) is below a value which is dependent on the tensile modulus (E) and shear modulus (G) of the second layer material (BC).

4. Method according to one of Claims 1 to 3, **characterized in that** the position of at least one of the optical waveguides (LW2, LW3) within the ribbon cable (LWB) is controlled in dependence on a smallest occurring layer thickness (D) of the second layer material (BC), which is measured in the direction perpendicular to the said plane along the radius of one of the optical waveguides.

5. Method according to one of Claims 1 to 4, **characterized in that** the first layer material (FC) is cured before the second layer material (BC) is applied.

6. Method according to Claim 5, **characterized in that** the first layer material (FC) is cured in an atmosphere with an oxygen content of 1 to 250 particles per million particles.

7. Method according to one of Claims 1 to 6, **characterized in that** the optical waveguide (LW2) is coated with the first layer material (FC), so that a layer thickness of the first layer material (FC) of between 6 and 9 micrometres is obtained.

8. Method according to one of Claims 1 to 7, **characterized in that** the first layer material (FC) and/or second layer material (BC) is chosen such that the tear strength of the second layer material (BC) is greater than the adhesive force between the first layer material (FC) and the second layer material (BC).

**Revendications**

1. Procédé de fabrication d'un câble (LWB) optique à ruban constitué de plusieurs fibres optiques ayant les caractéristiques :-

   - on revêt d'une première matière (FC) en couche le pourtour extérieur d'au moins une fibre (LW2) optique,

- on dispose côte à côte dans un plan, dans leur direction (OA) longitudinale, la fibre (LW2) optique et au moins une autre fibre (LW3) optique, de manière à former un intervalle (S) inoccupé par des fibres optiques d'une largeur (sb) d'intervalle entre deux fibres (LW2, LW3) optiques disposées côte à côte,
- on revêt d'une deuxième matière (BC) en couche les fibres (LW2, LW3) optiques qui a une épaisseur (D) dans une direction perpendiculaire audit plan, de manière à emplir l'espace intermédiaire compris entre les fibres (LW2, LW3) optiques de la deuxième matière (BC) en couche et à former le câble (LWB) à ruban,
- on mesure la largeur (sb) de l'intervalle,

**caractérisé en ce que** l'on règle la position d'au moins l'une des fibres (LW2, LW3) optiques de façon à ce que la largeur (sb) de l'intervalle soit plus petite qu'une valeur qui dépend de l'épaisseur (D) de la couche de la deuxième matière en couche, la valeur étant choisie de façon à ce que la deuxième matière (BC) en couche puisse être détachée de la première matière en couche.

2. Procédé suivant la revendication 1,
**caractérisé en ce qu'**on règle la position d'au moins l'une des fibres (LW2, LW3) optiques dans le câble (LWB) à ruban, en outre en fonction d'un module (E) de traction et d'un module (G) de cisaillement de la deuxième matière (BC) en couche.

3. Procédé suivant la revendication 2,
**caractérisé en ce qu'**on règle la position d'au moins l'une des fibres (LW2, LW3) optiques dans le câble (LWB) à ruban de façon à ce que la largeur (sb) de l'intervalle soit inférieure à une valeur qui dépend du module (E) de traction et du module (G) de cisaillement de la deuxième matière (BC) en couche.

4. Procédé suivant l'une des revendications 1 à 3,
**caractérisé en ce que** l'on règle la position d'au moins l'une des fibres (LW2, LW3) optiques dans le câble (LWB) à ruban en fonction d'une épaisseur (D) de la deuxième matière (BC) en couche la plus petite qui est mesurée dans une direction perpendiculaire audit plan le long du rayon de l'une des fibres optiques.

5. Procédé suivant l'une des revendications 1 à 4,
**caractérisé en ce que** l'on durcit la première matière (FC) en couche avant le dépôt de la deuxième matière (BC) en couche.

6. Procédé suivant la revendication 5,
**caractérisé en ce que** l'on durcit la première matière (FC) en couche dans une atmosphère ayant une proportion d'oxygène de 1 à 250 parties par million de parties.

7. Procédé suivant l'une des revendications 1 à 6,
**caractérisé en ce que** l'on revêt la fibre (LW2) optique de la première matière (FC) en couche de manière à obtenir une épaisseur de couche de la première matière (FC) en couche comprise entre 6 et 9 microns.

8. Procédé suivant l'une des revendications 1 à 7,
**caractérisé en ce qu'**on choisit la première matière (FC) en couche et/ou la deuxième matière (BC) en couche de façon à ce que la résistance à la déchirure de la deuxième matière (BC) en couche soit plus grande que la force d'adhérence entre la première matière (FC) en couche et la deuxième matière (BC) en couche.

FIG 1

FIG 2

FIG 3

FIG 5

FIG 4

EP 1 156 352 B1